# EUROPEAN PATENT SPECIFICATION

(11) **EP 3 731 644 B1**
(45) Date of publication and mention of the grant of the patent: **17.02.2021**
(21) Application number: 18836479.8
(22) Date of filing: 27.12.2018
(51) Int. Cl.: A23B 7/16, A23L 3/3463, A23B 7/154, A23L 19/00

(54) **COATING FOR FRUIT**
BESCHICHTUNG FÜR OBST
REVÊTEMENT POUR FRUIT

(30) Priority: 29.12.2017 EP 17211161
(43) Date of publication of application: 04.11.2020
(73) Proprietor: Liquidseal Holding B.V., 2316 XG Leiden (NL)
(72) Inventor: VAN VELZEN, Dick, 8711 JD Workum (NL); MONSTER, Victor Steven, 2343 BR OEGSTGEEST (NL); VAN DEN BERG, Eugene Robert, 2341 KD OEGSTGEEST (NL); GROENEWEGEN, Glenn Gareth, 1094 EE AMSTERDAM (NL)
(74) Representative: van Dam, Vincent
(86) International application number: PCT/EP2018/097040
(87) International publication number: WO 2019/129822

(56) References cited:
- EP-A1- 2 193 710
- EP-A2- 1 020 124
- WO-A1-2016/166389
- GB-A- 1 500 534

## Description

The present invention relates to a composition for coating fruit. The invention also relates to a method for coating fruit, comprising applying post-harvest to said fruit a coating composition. The invention also relates to a fruit item, coated in accordance with said method.

### Background of the invention

Fruit is often produced and harvested at a different location than the place of consumption. Transporting fruit therefore often involves long distance transport with a considerable time lapse. In addition, in many producing countries, especially in the case of developing economies, a long period of time may elapse between harvest and eventual refrigeration and/or consumption.

Amongst other problems, fruit tends to lose weight during prolonged periods of storage and/or transport. This has an adverse impact on the market value of fruit subjected to such delays, which may result in substantial economic loss.

Numerous coatings have previously been proposed for coating fruit to minimize weight loss during transport. Such coatings have made use of a wide variety of plastic compositions, waxes, fats etc.

A major difficulty exists in obtaining coatings for fruit which prevent excessive loss of weight of the coated fruit during transport and which do not impair breathing thereof to a counterproductive degree.

Coating compositions which prevent excessive loss of weight of the coated fruit during transport and which do not impair breathing of the fruit items are described in WO2017/126956 A1 of the present applicant. Nevertheless, the inventors have observed that there is still room for improvement as regards quality and appearance of coated fruits over a prolonged period of time.

EP 2 193 710 A1 discloses a composition for coating of lily bulbs to inhibit degradation of the bulbs during storage, a method of packaging lily bulbs with said composition, containers with said coating and a use of said coating.

WO 2016/166389 A1 discloses a composition for coating fruit comprising: a) between 0.5% and 1.5% (w/v) chitosan; b) between 0.5% and 1% (v/v) glycerol; c) between 0.03% and 0.1% (w/v) methylcellulose; and d) between 1.25% and 2.5% (w/v) gelatine.

GB 1 500 534 A discloses a composition for the preservation processing of agricultural products which carry on living functions after harvesting.

EP 1 020 124 A2 discloses a process for preserving fresh produce by coating the same with a coating composition capable of controlling the transmission of gases into and out of the produce during maturation and/or ripening of the produce.

### Summary of the invention

In a first aspect, the present invention relates to a composition according to claim 1.

In a second aspect the invention relates to a method according to claim 13

In a third aspect, the invention relates to a fruit item according to claim 15.

By applying the coating composition according to the invention, weight loss of fruit is minimized while the coated fruit item is given a glossy appearance throughout the delay caused by transport and/or storage. The coating composition according to the invention thus provides an important improvement with regard to prolonged quality and appearance of coated fruits in case of marketing delays. This has an advantageous impact on the market value of fruit.

At the same time, the coating resulting from said composition when applied to the fruit allows for a minimal continued metabolism and maturation/ ripening of the fruit item within the coating, so that taste of the fruit is not adversely impacted.

Application of the coating composition on fruit results after drying of the composition in a coating which is fully biodegradable and which can be easily washed off with water if desired, so that the coating in effect functions as a removable package for the fruit.

### Description of the drawings

Fig.1 shows a diagram of the weight loss of oranges after 30 days of incubation. Horizontal axis: treatments; vertical axis: percentage weight loss based on the weight before treatment.
Fig.2 shows a diagram of the gloss of oranges after 30 days of incubation. Horizontal axis: treatments; vertical axis: average gloss based on a score between 1 and 7.
Fig.3 shows a diagram of the weight loss of mangos after 9 days of incubation. Horizontal axis: treatments; vertical axis: percentage weight loss based on the weight before treatment.
Fig.4 shows a diagram of the gloss of mangos after 9 days of incubation. Horizontal axis: treatments; vertical axis: average gloss based on a score between 1 and 7.
Fig.5 shows a diagram of the weight loss of papayas after 13 days of incubation. Horizontal axis: treatments; vertical axis: percentage weight loss based on the weight before treatment.
Fig.6 shows a diagram of the gloss of papayas on day 1 after coating the fruit items. Horizontal axis: treatments; vertical axis: average gloss based on a score between 1 and 7.
Fig.7 shows a diagram of the weight loss of avocados after 9 days of incubation. Horizontal axis: treatments, vertical axis: percentage weight loss based on the weight before treatment.
Fig.8 shows a diagram of the gloss of avocados on day 9 after coating the fruit items. Horizontal axis: treatments; vertical axis: average gloss based on a score between 1 and 8.
Fig.9 shows a diagram of the BRIX values of papayas on day 13 after coating the fruit items. Horizontal axis: treatments; vertical axis: average BRIX values in Brix°.

### Detailed description of the invention

The invention provides for a coating composition which can be applied post-harvest to a fruit in order to minimize weight loss of said fruit while the coated fruit item has a glossy appearance.

The coating composition is in the form of a dispersion with water as the dispersant and comprises a plurality of dispersed substances. This plurality of dispersed substances comprises at least a portion of a polymer and/or a mixture of polymers, and a portion of a spacing agent.

The composition contains at least a linear homopolymer or copolymer of vinyl alcohol. The inventors have surprisingly discovered that the use of linear vinyl alcohol polymers lead to increased gloss and decreased weight loss of fruit coated with said composition during marketing delays.

The vinyl alcohol polymers used in the composition preferably have a molecular weight of at least 10.000 Da. Such polymers cannot pass the membranes of the digestive tracts of the consumers of the fruit. This way washing of the coated fruit is not necessary.

Because the inventors have discovered that it is the presence the vinyl alcohol polymer which confers the advantageous effects of increased gloss and decreased weight loss the composition may comprise vinyl alcohol polymers in a proportion of at least 50% by weight of the total weight of the dispersed polymeric substances, preferably based on the weight the total weight of all the dispersed substances.

In one embodiment the composition therefore is in the form of a dispersion with water as the dispersant and comprising a plurality of dispersed substances, comprising: A1) a linear homopolymer or copolymer of vinyl alcohol having a hydrolysis degree between 75 and 100% or a combination thereof wherein said polymer of vinyl alcohol constitutes at least 50% by weight of the total weight of the dispersed polymeric substances; and B) a spacing agent, wherein said spacing agent is present in an amount between 0,001 and 1,0 % by weight based on the weight of the polymers within the composition, and wherein the spacing agent is a polyol.

In another embodiment the the composition therefore is in the form of a dispersion with water as the dispersant and comprising a plurality of dispersed substances, comprising:
A2) a linear homopolymer or copolymer of vinyl alcohol having a hydrolysis degree between 75 and 100% or a combination thereof and a polymer produced from the monomers vinyl acetate and ethylene and optionally a vinyl ester of a highly branched carboxylic acid; and
B) a spacing agent, wherein said spacing agent is present in an amount between 0,001 and 1,0 % by weight based on the weight of the polymers within the composition, and wherein the spacing agent is a polyol.

When used in combination with a polymer produced from the monomers vinyl acetate and ethylene and optionally a vinyl ester of a highly branched carboxylic acid it is also possible that the composition comprises vinyl alcohol polymer(s) in a proportion of less than 50% by weight of the dispersed polymeric substances in the dispersion and/or less than 50% by weight of all dispersed substances in the dispersion.

It is however preferred, regardless of whether the vinyl alcohol polymers are used as sole polymer species or in combination with other polymer species that the composition comprises vinyl alcohol polymers in a proportion of more than 50% by weight of the total amount of dispersed polymeric substances in the dispersion.

The composition may therefore suitably comprise vinyl alcohol polymers in a proportion of at least 55% by weight of the total weight of the dispersed polymeric substances, such as at least 60 %, at least 65%, at least 75 %, at least 80%, at least 85%, at least 90%, at least 95%, at least 96 %, at least 97%, at least 98% or at least 99% by weight of the total weight of the dispersed polymeric substances or in ranges between any two of these percentages.

In one embodiment the composition comprises essentially no further polymers than the abovementioned polyvinyl alcohol polymers. With essentially no further polymers is meant preferably less than 1% by weight of the polymers. Such compositions perform particularly well with regard to increased gloss and decreased weight loss.

The composition comprises vinyl alcohol polymers in a proportion of more than 50% by weight of the total amount of all dispersed substances in the dispersion (w/w). The composition may suitably comprise vinyl alcohol polymers in a proportion of at least 55% by weight of the total weight of all dispersed substances, such as at least 60 %, at least 65%, at least 75 %, at least 80%, at least 85%, at least 90%, at least 95%, at least 96 %, at least 97%, at least 98% or at least 99% by weight of the total weight of all dispersed substances or in ranges between any two of these percentages.

The vinyl alcohol polymer preferably is a polyvinyl alcohol homopolymer (PVOH), an ethylene vinyl alcohol copolymer (EVOH) or a combination thereof. In a highly preferred embodiment the vinyl alcohol polymer is a polyvinyl alcohol homopolymer. The inventors have observed high performance with regard to increased gloss and decreased weight loss of fruit coated with composition based on these polymers.

In the composition the homopolymer or copolymer of vinyl alcohol, such as said polyvinyl alcohol homopolymer or ethylene vinyl alcohol copolymer, is preferably water soluble, i.e. at normal standard temperature, at 20°C and absolute pressure of 1 bar at least to the extent of their concentration in the composition, such as cold water soluble vinyl alcohol polymers. Coatings obtained with such polymers show better results and more homogeneous coverage of the fruit items than coatings with non-soluble polymers such as cold-water insoluble polyvinyl alcohol polymers.

Vinyl alcohol polymers with a high hydrolysis degree are in particular suitable. Therefore, in the composition the homopolymer or copolymer of vinyl alcohol, such as said polyvinyl alcohol homopolymer or ethylene vinyl alcohol copolymer, suitably have a hydrolysis degree between 75 and 100 %, preferably between 80 and 100%, more preferably between 85 and 98 %, more preferably between 87 and 98 % such as between 88 and 98%. Very suitable hydrolysis degrees are between 85 and 100 %, preferably between 85 and 99,9%, more preferably between 7 and 99,9 %, more preferably between 87 and 99,9 % such as between 88 and 99,9%. It is preferred that the polyvinyl alcohol homopolymer and the ethylene vinyl alcohol copolymer have a hydrolysis degree of between 95 and 100 %, such as between 95 and 99,9 %, such as between 97 and 99,5 %. Hydrolysis refers to the general meaning known in the art, namely the molar hydrolysis degree, also indicated as mol.%. The inventors have observed that when polymers are used with these rather high hydrolysis degrees, this leads to reduced stickiness of the coatings when applied on the fruit. This is preferred because coatings with low stickiness have higher integrity, a better appearance and better protective packaging function of the coating.

The polymer portion in the composition may be a mixture of polymers, which is a linear homopolymer or copolymer of vinyl alcohol or a combination thereof and a polymer produced from the monomers vinyl acetate and ethylene (VAE-copolymer) and optionally a vinyl ester of a highly branched carboxylic acid (VAE-terpolymer). Such compositions also perform well with regard to increased gloss and decreased weight loss as evidenced in the examples below. Suitable proportions of vinyl alcohol polymer to said VAE polymer may range from 10-100:90:0, such as 10:90, 20: 80, 30:70, 40:60, 50:50, 60:40, 70:30: 80:20, 90:10, 100:0, preferably vinyl alcohol polymer is present in a ratio of 50% or more based on the sum of the weight of vinyl alcohol polymer and VAE polymer.

In case the VAE polymer is produced from the monomers vinyl acetate and ethylene, the polymer is a copolymer. In case the VAE polymer is produced from the monomers vinyl acetate, ethylene and a vinyl ester of a highly branched carboxylic acid, the polymer is a terpolymer. Highly branched carboxylic acids include tertiary carboxylic acids, including neo acids (neo alkanoic acids) which exhibit highly branched structures in which the carboxylic group is attached to a quaternary carbon atom where R1, R2 and R3 are alkyl groups. Neo acids are trialkyl acetic acids, which include a tetra substituted alpha-carbon. Neo acids and the manufacture thereof are for instance described in M. Fefer, Journal of the American Oil Chemists' Society April 1978, Volume 55, Issue 4, pp A342-A348. Examples of such acids are neopentanoic acids and neodecanoic acids, such as versatic acid of Momentive Performance Materials or Hexion. For instance versatic acid (9 or 10) of Momentive Performance Materials or Hexion may be used. The vinyl ester of a highly branched carboxylic acid is chosen to affect the rate at which the acetate ester may saponificate and thus to stabilize the terpolymer molecules.

In accordance with the invention the coating composition also comprises a portion of a spacing agent. The spacing agent is present in amount between 0,001 and 1,0 % by weight based on the weight of the polymers within the composition. The presence of this spacing agent is necessary to provide channels (spaces) for diffusion of metabolic gases, allowing a minimal continued metabolism and maturation of the fruit item within the coating, so that taste of the fruit is not adversely impacted.

The spacing agent is present in an amount between 0,001 and 1,0 % by weight based on the weight of the polymers within the composition, such as between 0,005 and 0,9 % by weight based on the weight of the polymers within the composition. Suitable spacing agents amounts may be in the range between 0,005 and 0,75 %, between 0,005 and 0,5 %, between 0,01 to 0,9 %, between 0,01 and 0,75 % or between 0,01 and 0,5 % by weight based on the weight of the polymers within the composition. Particularly useful compositions may comprise spacing agent between 0,1 and 0,5 % by weight based on the weight of the polymers within the composition. With these concentrations a minimal continued metabolism and maturation of the fruit item within the coating is ensured, so that taste of the fruit is not adversely impacted, while on the other hand increased gloss and decreased weight loss are achieved. A further advantage of having a spacing agent in the composition in these concentrations is that the coating remains intact even in areas of high relative humidity. These low concentrations of spacing agent also contribute to reduced stickiness of the coatings when applied on the fruit.

The spacing agent is a polyol, such as a diol or a triol. Inclusion of polyols in the composition reduces stickiness of coatings compared to other spacing agents described in the art such as starch. In addition of a substantial amount of starch would increase permeability such that weight loss is not reduced. It is therefore preferred that the composition essentially does not comprise starch, and if it is present that is it present in an amount which is at least a factor 10, preferably 100, preferably 1000 less than the amount of polyol present in the composition. Suitable polyols include glycols and polyethers. Suitable polyols may be selected from the group of glycerol, sorbitol, propylene glycol, polyethylene glycol (polyethylene oxide) or mixtures thereof. Preferably said spacing agent is glycerol. Glycerol may be present in an amount between 0,001 and 1,0 % by weight based on the weight of the polymers within the composition, such as between 0,005 and 0,9 % by weight based on the weight of the polymers within the composition. Suitable glycerol amounts may be in the range of between 0,005 and 0,75 %, between 0,005 and 0,5 %, between 0,01 to 0,9 %, between 0,01 and 0,75 % or between 0,01 and 0,5 % by weight based on the weight of the polymers within the composition. Particularly useful compositions may comprise glycerol in an amount between 0,1 and 0,5 % by weight based on the weight of the polymers within the composition. Best results are obtained with glycerol concentrations between 0,01 and 1,0 %, such as between 0,01 and 0,9 % by weight of glycerol based on the weight of the polymers within the composition. With these concentrations a minimal continued metabolism and maturation of the fruit item within the coating is ensured, so that taste of the fruit is not adversely impacted. On the other hand increased gloss and decreased weight loss are achieved. A further advantage of having glycerol in the composition in these concentrations is that the coating remains intact even a high relative humidity. These low concentrations of glycerol also contribute to reduced stickiness of the coatings when applied on the fruit.

A coating composition may in addition to the polymer portion and spacing agent portion mentioned above, also comprise further dispersed substances as well. Such further dispersed substances include bioactive agents, nutrients, fertilizers, trace elements, emulsifiers, surfactants, anti-foaming agents, natural resins, natural polymers, biopolymers, sugars, fatty acids, fatty acid esters, mono/di/tri glycerides, sucrose esters, waxes, pH regulators, antioxidants, scrubbing agents etc. It is preferred that the composition comprises less than 50% by weight of further dispersed substances based on the (dry) weight of the composition, preferably less than 10%, or less than 5 %, such as 1, 2, 3 or 4 % or less. It is further preferred that the composition comprises less than 50% by weight of further dispersed substances based on the weight of the composition (weight of the dispersion), preferably less than 10 %, or less than 5 %, such as 1, 2, 3 or 4 % or less.

In a highly preferred embodiment, the composition is a dispersion of polyvinyl alcohol homopolymer and glycerol and less than 10 weight % by volume of the dispersion of further dispersed substances in water. Preferably this composition comprises less preferably less than 5 %, such as 1, 2, 3 or 4 weight % by volume of the dispersion or less. Preferably, the weight amount of further dispersed substances is less than the weight amount of polyvinyl alcohol polymer.

Bioactive agents may be selected from the group of ethylene oxidants or neutralizers, antibiotics, fungicides, stabilizers, anti-parasitics, anti-infection means, other biologically active compounds, compounds controlling biological active molecules, useful bacteria, useful fungi, useful enzymes, UV-stabilizers, UV-blockers, etc. Such bioactive agents can be chosen from any group of available and suitable bioactive agents. Such bioactive agents may be used in order to further improve the conditions during storage of the harvested fruit and to further maintain health, appearance and thus commercial value in a later stage of commercial use. Preferably the bioactive agents do not form a health or environmental risk. Preferably the one or more bioactive agents are used in an amount of less than 5 % by weight of the polymer within the coating composition. For practical purposes, the bioactive agents are preferably water soluble, although other bioactive agents, which can be made watersoluble, such as by using a carrier or encapsulation, are also applicable. In other cases an emulsifier may be added. If one or more crop protecting agents are included in the coating composition, the coating will result in a decrease of the risk of infection by slowing down the development of spores already present before applying the coating. Because of slow and sustained release of the entrapped crop protecting agents, the coating forms a barrier to newly deposited possible harmful microorganisms for an extended-time.

Typical values for the viscosity of the dispersion compositions are from 3-55 mPas (as determined according to the Hoeppler falling ball method, with a 4 wt.% solution at 20°C) in accordance with DIN 53015 / JIS K 6726, however viscosity values outside this range may also be applicable. It is preferred that the viscosity values are not too high, i.e. preferably below 30, because this facilitates handling of the compositions as used according to the invention. The viscosity values in this application refer to viscosity as determined for a 4% aqueous solution of the polymer at 20°C in accordance with DIN 53015 / JIS K 6726.

In case of a polyvinyl alcohol homopolymer it is preferred that the viscosity is lower than 11,5, such as between 3,0 and 9,0. Suitable exemplary polyvinyl alcohol homopolymers may for instance have a viscosity of between 3,2 and 3,8 or between 9,0 and 11,0.

In case of a ethylene vinyl alcohol copolymer it is preferred that the viscosity is lower than 30, such as between 3 and 30. Suitable exemplary polyvinyl alcohol homopolymers may for instance have a viscosity of between 25 and 30 or between 12,0 and 16,0 or between 3,6 and 4,4.

It is preferred that the polyvinyl alcohol homopolymer has a viscosity lower than 11,5, such as between 3,0 and 9,0, and a hydrolysis degree of between 95 and 100 %, such as between 95 and 99,9 %, such as between 97 and 99,5 %. Suitable examples of polyvinyl alcohol homopolymer have a viscosity of between 3,2 and 3,8 and a hydrolysis degree between 98,0 and 99,0 or a viscosity between 9,0 and 11,0 and a hydrolysis degree between 98,0 and 98,8.

It is preferred that the ethylene vinyl alcohol copolymer has a viscosity lower than 30, such as between 3 and 30 and a hydrolysis degree of between 95 and 100 %, such as between 95 and 99,9 %, such as between 97 and 99,5 %. Suitable examples of ethylene vinyl alcohol copolymer have a viscosity of between 25-30 and a hydrolysis degree between 97,0 and 99,0 or a viscosity between 12,0 and 16,0 and a hydrolysis degree between 99,0 and 99,5 or a viscosity between 3,6 and 4,4 and a hydrolysis degree between 98,0 and 99,0. These combinations of viscosity and hydrolysis grade lead to an optimal balance between reduced stickiness of the coatings when applied on the fruit, easy processing and minimum weight loss of coated fruit items.

The coating compositions as used according to the invention may comprise a polymer portion in an amount of from 0,3 to 25 weight % by volume of the composition. Preferably the composition of the invention comprises polymers in an amount of from 1,5 to 20 weight % by volume of the composition, such as 3,0 to 20 weight % by volume of the composition, more preferably in an amount of from 5 to 15 weight % by volume of the composition.

In a second aspect the invention relates to a method for coating fruit, comprising applying post-harvest to a fruit item a coating composition as described above. In this respect the invention relates in a third aspect also to a fruit item coated in accordance with this method.

Said fruit item is preferably selected from the group of banana, mango, melon, citrus fruits, papayas, lychees, oranges, apples, apricots, avocados, bananas, cantaloupes, figs, guavas, kiwis, nectarines, peaches, pears, persimmons, plums, and tomatoes.

In case of a concentrated composition with low water content, the composition is diluted prior to use.

The method may result in a thickness of the coating of from 0,3 to 25 µm, preferably 1,5 to 20 µm. This can be achieved in a single coating step. Such thicknesses can be achieved by dipping the fruit in a composition with a polymer concentration of 0,3 to 25 or 1,5 to 20 % weight by volume, respectively. A coating of 1,5 to 10 µm is particularly preferred because this provides a minimum weight loss of coated fruit items, while the fruit items have a glossy appearance. Very surprisingly, while prior art coatings often require high coating thickness to prevent a very matt appearance, with the coating composition of the invention highly glossy fruit items are obtained with thin coatings with thicknesses of 15 µm and below. This saves material and also enables to apply a suitable coating in one step, without the necessity to apply multiple layers.

It is also possible to apply multiple coating steps, for instance in two steps. In this case the first coating step results in a primer layer and the second step in a "finishing" layer. For the sake of efficiency it is however preferred that coating is performed in a single step.

The dispersion of the coating composition according to the invention may be applied one or more times directly on the fruit items. Preferably the dispersion is applied once. The coating dispersion can be applied by several techniques, preferably by spraying or immersion rather than by brushing. When the coating dispersion used has a high viscosity, preferably a dilution of the dispersion is used for applying the dispersion, whereas with a polymer dispersion with a low viscosity, preferably a spraying/immersion technique is used. The coating is allowed or made to dry after being applied. During the process of formation of the coating sequestering, crosslinking and other networking of polymers of the coating composition occurs.

The dispersion of the coating composition according to the invention is applied directly on the fruit items. The coating applied to the fruit can therefore be regarded as a packaging material which is directly applied to the fruit skin. The composition is applied at least on the fruit skin, although applying the composition also on fruit stems/ and or broken surfaces thereof will not be detrimental to gloss and weight stability.

In view of environmental issues the coating is preferably, even if only at a very slow rate, water soluble. Therefore the coating in fact functions as a removable package for the fruit. Furthermore, thereby, e.g. bacteria more rapidly and easily break down the coating after its use into harmless products, i.e. carbon dioxide and water. The ratio of spacing agent to polymer in the composition of the invention ensures a balance between water resistance in case of high relative humidity and water solubility in case of longer direct immersion in water.

The following examples are meant to illustrate and not to limit the invention.

### Examples

### Example 1: oranges

To test the effect of coating oranges post-harvest with various compositions according to the invention, fruits were coated with the following compositions:
1) Solutions of 5 % by weight to volume of a copolymer of ethylene and vinyl acetate (VAE) to which glycerol was added in concentrations of 0,01, 0,1, and 1 weight % based on the weight of the polymer. These compositions are indicated in tables 1 to 4 below as VAE, 0,01 % glycerol, VAE, 0,1 % glycerol, VAE, 1 % glycerol.
2) Solutions of 7,5 % by weight to volume of a homopolymer of polyvinyl alcohol (PVOH) to which glycerol was added in concentrations of 0,01, 0,1, and 1 weight % based on the weight of the polymer. These compositions are indicated in tables 1 to 4 below as PVOH, 0,01 % glycerol, PVOH, 0,1 % glycerol, PVOH, 1 % glycerol.
3) Solutions of 3,75 % by weight to volume of a homopolymer of polyvinyl alcohol (PVOH) and 2,5 % by weight to volume of a copolymer of ethylene and vinyl acetate (VAE) to which glycerol was added in concentrations of 0,01, 0,1, and 1 weight % based on the weight of the polymers in the composition. These compositions are indicated in tables 1 to 4 below as PVOH, 0,01 % glycerol, PVOH, 0,1 % glycerol, PVOH, 1 % glycerol. In this example POVAL 6-88 of Kuraray ((POVAL™), viscosity ∼6, hydrolysis grade ∼ 88 mol.%) was used as PVOH. Coatings were applied by dipping oranges of known weight in one of the above compositions resulting in a layer thickness of 5 to 7,5 micron. Control oranges were not coated

After 30 days of incubation the weight of the oranges was determined again and the average weight loss per orange 30 days after application of the coating was calculated from a set of 13 oranges that were exposed to the same treatment.

Fruit was incubated at room temperature at a relative humidity of between 40 and 50%.

Also the gloss was determined. This was done by a test panel. Gloss was assessed on the basis of a 1-7 score. For purposes of reliability, the oranges were randomized and the volunteers of the test panel were not informed of the treatment that oranges were subjected to.

The results are shown in table 1.

**Table 1: Weight loss over 30 days and gloss with various coatings: oranges.**

| **Composition** | **Weight loss (%) after 30 days** | **Gloss (day 30)** |
|---|---|---|
| No treatment | 22,29 | 3,4 |
| VAE, 0,01 % glycerol (comparative example) | 19,45 | 3,2 |
| VAE, 0,1 % glycerol (comparative example) | 19,16 | 3,1 |
| VAE, 1 % glycerol (comparative example) | 18,85 | 3,0 |
| PVOH, 0,01 % glycerol | 17,74 | 6,7 |
| PVOH, 0,1 % glycerol | 17,15 | 5,7 |
| PVOH, 1 % glycerol | 17,04 | 5,6 |
| VAE + PVOH, 0,01 % glycerol | 17,43 | 5,8 |
| VAE + PVOH, 0,1 % glycerol | 18,18 | 4,6 |
| VAE + PVOH, 1 % glycerol | 17,57 | 5,2 |

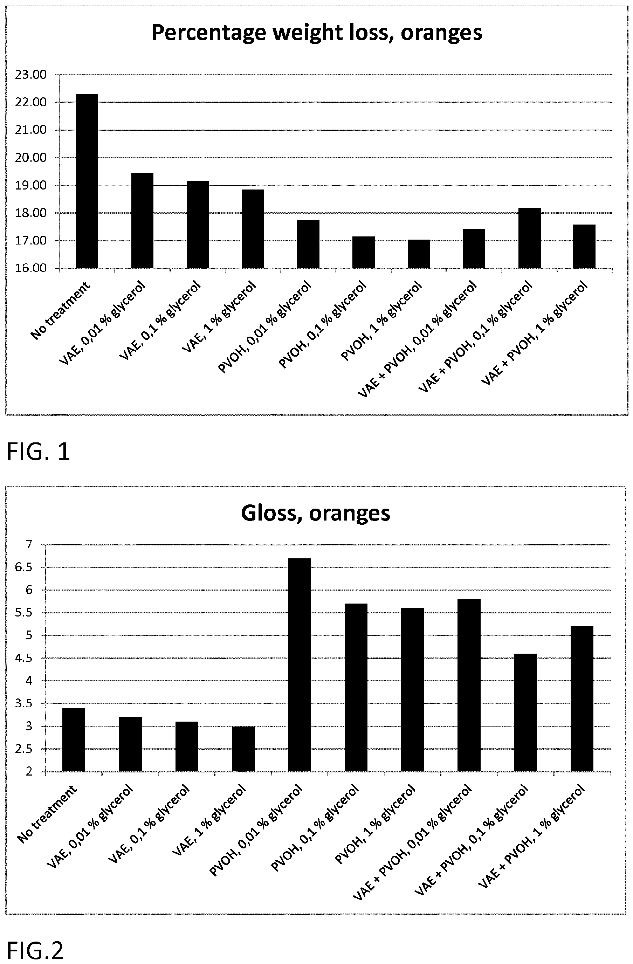

The results of table 1 are visualized in the diagrams of Fig.1 and Fig.2. Fig.1 shows that when the PVOH containing compositions according to the invention are applied to oranges, a marked reduction of weight loss of oranges is achieved compared to untreated oranges and oranges treated with a polymer composition which does not contain PVOH. Low weight loss is desirable because fruit items are in general traded on the basis of weight and a reduction of weight loss implies a reduction of "inflation" of the marketing value of the fruit during transport and storage.

Furthermore, Fig.2 shows that when the PVOH containing compositions according to the invention are applied to oranges, a marked increase of gloss of oranges is achieved compared to untreated oranges and oranges treated with a polymer composition which does not contain PVOH. This increased gloss is most pronounced if a composition based on PVOH and glycerol is used without further polymers (PVOH, 0,01 % glycerol, PVOH, 0,1 % glycerol, PVOH, 1 % glycerol). The best gloss results are obtained with low amounts of glycerol (0,01%).

### Example 2: mango

The test described in example 1 was performed also on mangos by dipping mangos of known weight in one of the above compositions described in example 1 resulting in a layer thickness of 5 to 7,5 micron. Control mangos were not coated. The same conditions as in example 1 were used, except where indicated.

After 9 days of incubation the weight of the mangos was determined again and the average weight loss per mango 9 days after application of the coating was calculated from a set of 6 mangos that were exposed to the same treatment. Gloss was also assessed as described in example 1. The results are shown in table 3.

**Table 2: Weight loss after 9 days and gloss with various coatings: mango.**

| **Composition** | **Weight loss (%) after 9 days** | **Gloss (day 9)** |
|---|---|---|
| No treatment | 2,25 | 1,94 |
| VAE, 0,01 % glycerol (comparative example) | 2,25 | 1,17 |
| VAE, 0,1 % glycerol (comparative example) | 2,08 | 1,17 |
| VAE, 1 % glycerol (comparative example) | 2,22 | 1,33 |
| PVOH, 0,01 % glycerol | 1,88 | 6,17 |
| PVOH, 0,1 % glycerol | 1,79 | 4,83 |
| PVOH, 1 % glycerol | 1,94 | 5,67 |
| VAE + PVOH, 0,01 % glycerol | 1,82 | 3,83 |
| VAE + PVOH, 0,1 % glycerol | 1,90 | 4,50 |
| VAE + PVOH, 1 % glycerol | 1,84 | 3,67 |

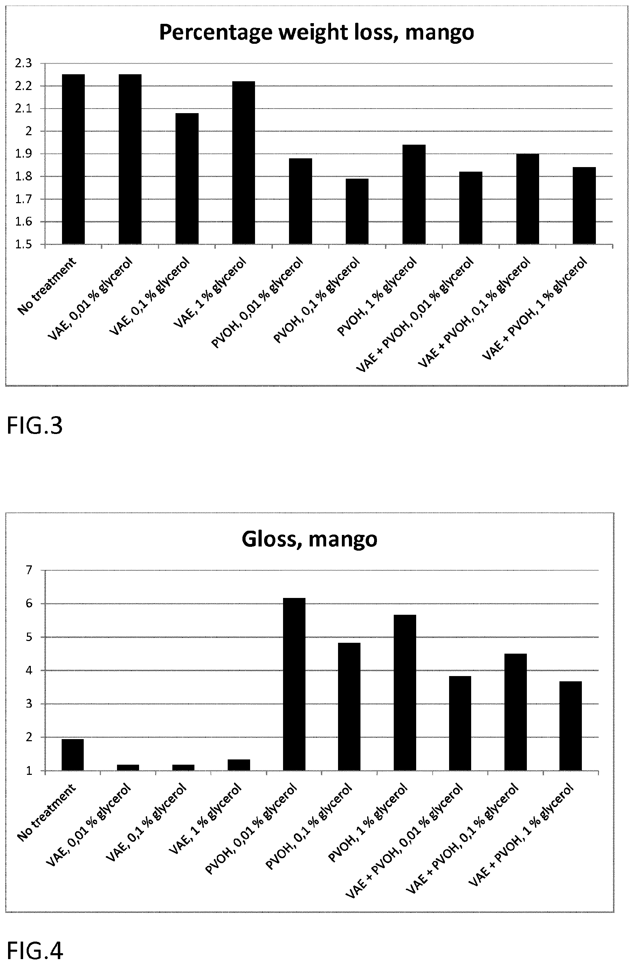

The results of table 2 are visualized in the diagrams of Fig.3 and Fig.4.

Fig.3 shows that when the PVOH containing compositions according to the invention are applied to mangos, a marked reduction of weight loss of mangos is achieved compared to untreated mangos and mangos treated with a polymer composition which does not contain PVOH.

Furthermore, Fig.4 shows that when the PVOH containing compositions according to the invention are applied to mangos, a marked increase of gloss of mangos is achieved compared to untreated mangos and mangos treated with a polymer composition which does not contain PVOH. This increased gloss is most pronounced if a composition based on PVOH and glycerol is used without further polymers (PVOH, 0,01 % glycerol, PVOH, 0,1 % glycerol, PVOH, 1 % glycerol). The best gloss results are obtained with low amounts of glycerol (0,01%).

### Example 3: papaya

The test described in example 1 was performed also on papayas by dipping papayas of known weight in one of the above compositions described in example 1 resulting in a layer thickness of 5 to 7,5 micron. Control papayas were not coated. The same conditions as in example 1 were used, except where indicated.

After 13 days of incubation the weight of the papayas was determined again and the average weight loss per papaya 13 days after application of the coating was calculated from a set of 6 papayas that were exposed to the same treatment. Gloss was also assessed as described in example 1, in this case on the first day after application of the coating. The results are shown in table 3.

**Table 3: Weight loss after 13 days and gloss with various coatings: papaya.**

| **Composition** | **Weight loss (%) after 13 days** | **Gloss (day 1)** |
|---|---|---|
| No treatment | 29,16 | 1,00 |
| VAE, 0,01 % glycerol (comparative example) | 21,91 | 1,50 |
| VAE, 0,1 % glycerol (comparative example) | 22,22 | 1,50 |
| VAE, 1 % glycerol (comparative example) | 21,86 | 1,25 |
| PVOH, 0,01 % glycerol | 14,27 | 5,25 |
| PVOH, 0,1 % glycerol | 15,64 | 6,00 |
| PVOH, 1 % glycerol | 15,90 | 5,50 |
| VAE + PVOH, 0,01 % glycerol | 16,85 | 2,25 |
| VAE + PVOH, 0,1 % glycerol | 18,52 | 1,75 |
| VAE + PVOH, 1 % glycerol | 19, 60 | 3,00 |

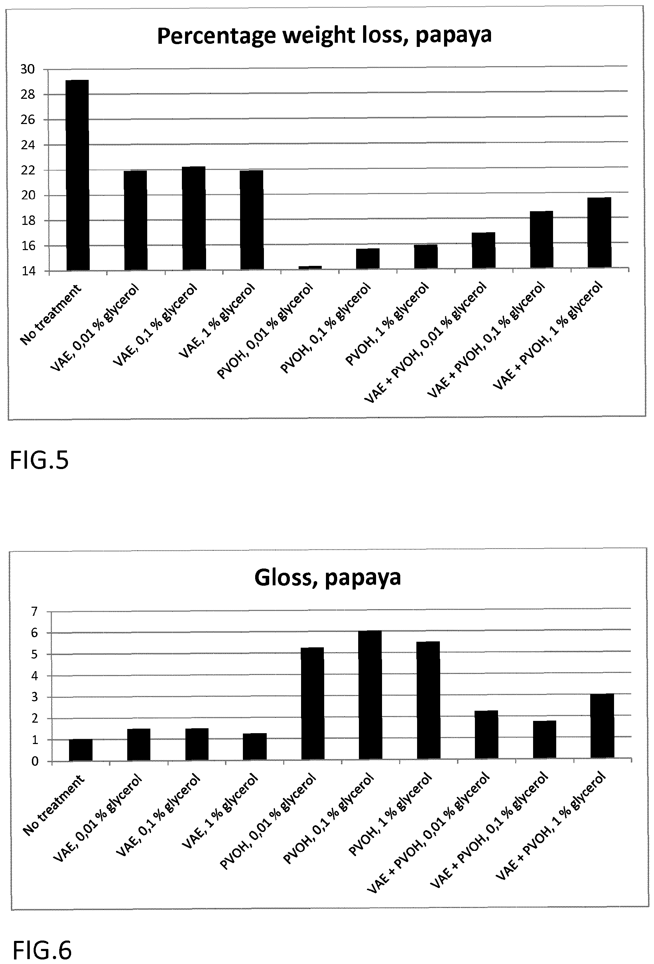

The results of table 3 are visualized in the diagrams of Fig.5 and Fig.6.

Fig.5 shows that when the PVOH containing compositions according to the invention are applied to papayas, a marked reduction of weight loss of papayas is achieved compared to untreated papayas and papayas treated with a polymer composition which does not contain PVOH. This reduction of weight loss is most pronounced if a composition based on PVOH and glycerol is used without further polymers (PVOH, 0,01 % glycerol, PVOH, 0,1 % glycerol, PVOH, 1 % glycerol).

Furthermore, Fig.6 shows that when the PVOH containing compositions according to the invention are applied to papayas, a marked increase of gloss of papayas is achieved compared to untreated papayas and papayas treated with a polymer composition which does not contain PVOH. This increased gloss is most pronounced if a composition based on PVOH and glycerol is used without further polymers (PVOH, 0,01 % glycerol, PVOH, 0,1 % glycerol, PVOH, 1 % glycerol) .

### Example 4: avocado

The test described in example 1 was performed also on avocados by dipping avocados of known weight in one of the above compositions described in example 1 resulting in a layer thickness of 5 to 7,5 micron. Control avocados were not coated. The same conditions as in example 1 were used, except where indicated.

After 9 days of incubation the weight of the avocados was determined again and the average weight loss per avocado 9 days after application of the coating was calculated from a set of 6 avocados that were exposed to the same treatment. Gloss was also assessed as described in example 1, in this case on the 9^{th} day after application of the coating. The results are shown in table 4.

**Table 4: Weight loss after 9 days and gloss with various coatings: avocado.**

| **Composition** | **Weight loss (%) after 9 days** | **Gloss (day 9)** |
|---|---|---|
| No treatment | 2,81 | 2,67 |
| VAE, 0,01 % glycerol (comparative example) | 1,99 | 3,00 |
| VAE, 0,1 % glycerol (comparative example) | 1,98 | 3,20 |
| VAE, 1 % glycerol (comparative example) | 2,32 | 3,40 |
| PVOH, 0,01 % glycerol | 1,57 | 7,40 |
| PVOH, 0,1 % glycerol | 1,44 | 6,60 |
| PVOH, 1 % glycerol | 1,75 | 7,80 |
| VAE + PVOH, 0,01 % glycerol | 1,50 | 5,60 |
| VAE + PVOH, 0,1 % glycerol | 1,49 | 6,40 |
| VAE + PVOH, 1 % glycerol | 1,58 | 6,00 |

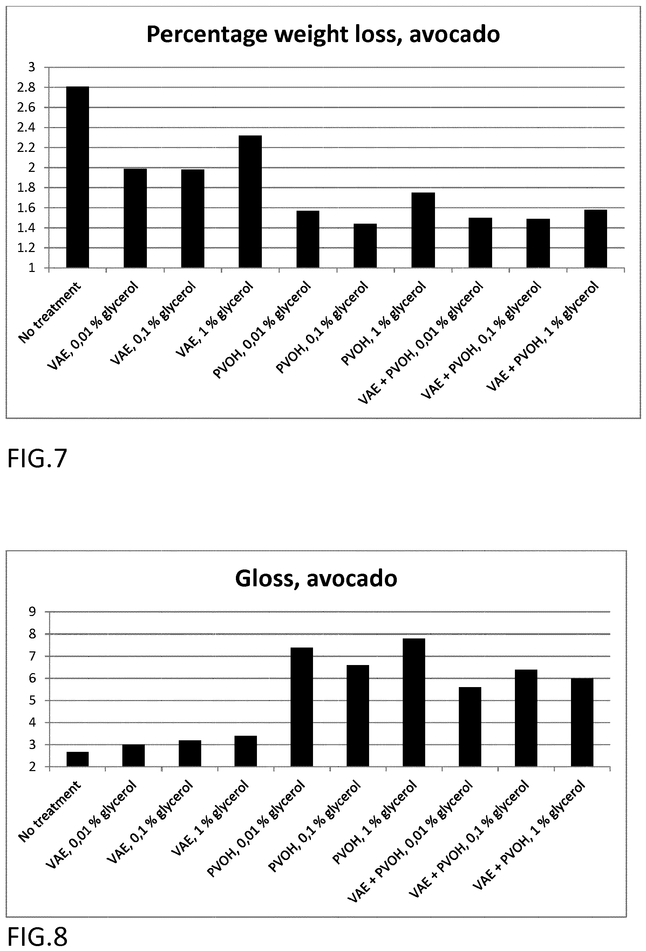

The results of table 4 are visualized in the diagrams of Fig.7 and Fig.8.

Fig.7 shows that when the PVOH containing compositions according to the invention are applied to avocados, a marked reduction of weight loss of avocados is achieved compared to untreated avocados and avocados treated with a polymer composition which does not contain PVOH.

Furthermore, Fig.8 shows that when the PVOH containing compositions according to the invention are applied to avocados, a marked increase of gloss of avocados is achieved compared to untreated avocados and avocados treated with a polymer composition which does not contain PVOH. This increased gloss is most pronounced if a composition based on PVOH and glycerol is used without further polymers (PVOH, 0,01 % glycerol, PVOH, 0,1 % glycerol, PVOH, 1 % glycerol).

### Example 5

Fruit was also subjected to BRIX testing. The BRIX scale is a measurement for the sugar content of fruit. It reflects the amount of solids in the sap, which includes sugars and valuable minerals and trace minerals. A higher BRIX indicates better flavour and better nutrient value. BRIX values were determined with a refractometer.

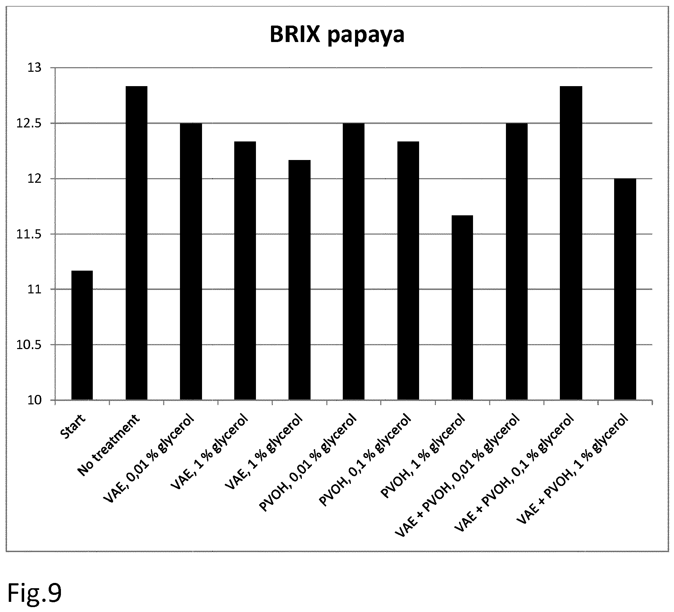

The papayas of example 3 were subjected to a BRIX test of which the results are shown in Fig. 9. As can be seen in Fig.9 at "start" i.e. before treatment the average BRIX of papayas was just above 11 Brix°. BRIX values were determined after 13 days for papayas which were subjected to the various treatments described above in example 1 and 3. It is clear from Fig.9 that, regardless of the treatment, the Brix values have increased in time, indicating ripening and development of taste and flavour during the time of incubation.

### Example 6

The influence of viscosity and hydrolysis grade on weight loss of mangos was tested by using the polymers as listed in Table 5. The viscosity refers to viscosity as determined for a 4% aqueous solution of the polymer at 20°C in accordance with DIN 53015 / JIS K 6726. The polymers were obtained from Kuraray (POVAL™).

**Table 5: polymers with different viscosity and hydrolysis grade.**

| Polymer | Viscosity [mPA.s]¹ | Hydrolysis grade [mol.%] |
|---|---|---|
| PVOH (Poval 3-98) - polymer I | 3,2-3,8 | 98,0-99,0 |
| PVOH (Poval 10-98) - polymer II | 9,0-11,0 | 98,0-98,8 |
| PVOH (Poval 13-88) - polymer III | 11,5-14,5 | 86,7-88,7 |

The polymers listed in Table 5 were used in 3 coating compositions in a concentration of 3,5 weight % of polymer based on the weight of the composition. As spacing agent glycerol was used in a concentration of 0,1 weight % based on the weight of the polymer in the composition. The composition with polymer I is referred to as composition A, composition with polymer II is referred to as composition B and the composition with polymer III is referred to as composition C. For each composition 8 mangos were coated in accordance with the method described in example 1 and average weight loss of 8 mangos per test condition was determined after 25 days incubation at room temperature. The average weight of the mangos at the first day of incubation was taken as reference. Table 6 shows the relative weight losses, wherein the highest average weight loss was normalized to 1.

**Table 6: relative weight loss of several PVOH based compositions.**

| | Glycerol 0,1 wt.% |
|---|---|
| Relative weight loss | |
| Composition A | 0,85 |
| Composition B | 0,83 |
| Composition C | 1 |

Table 6 shows that at a glycerol concentration of 0,1 wt.% based on the weight of the polymer in the composition the most pronounced reduction of weight loss is obtained with compositions comprising a polymer with a very high hydrolysis grade in combination with a low viscosity.

### Example 7

To test the effect of coating mangos post-harvest with various compositions according to the invention, mangos were coated with the compositions based on ethylene vinyl-alcohol (EVOH) copolymers as listed in Table 7. The viscosity refers to viscosity as determined for a 4% aqueous solution of the polymer at 20°C in accordance with DIN 53015 / JIS K 6726. The polymers were obtained from Kuraray (EXCEVAL™)

**Table 7: different EVOH polymers (Mangos).**

| Polymer | Viscosity [mPA.s]¹ | Hydrolysis grade [mol.%] |
|---|---|---|
| EVOH (RS-2117) - polymer IV | 25-30 | 98,0-99,0 |
| EVOH (HR-3010) - polymer V | 12,0-16,0 | 98,0-98,8 |
| EVOH (AQ-4104) - polymer VI | 11.5-14.5 | 86,7-88,7 |

Compositions were as follows. In a first composition (composition D), polymer IV was used in a concentration of 1 wt.% based on the weight of the composition. In a second composition (composition E), polymer V was used in a concentration of 3 wt.% based on the weight of the composition. In a third composition (composition F), polymer VI was used in a concentration of 5 wt.% based on the weight of the composition. All compositions also contained a spacing agent in the form of glycerol in a concentration of 0,01 wt.% based on the weight of the polymer in the composition. Mangos were coated in accordance with the method described in example 1 and weight loss was determined after 14 days incubation at room temperature. Uncoated mangos were taken as control. Average weight loss of 7 mangos per test condition was determined after 14 days incubation at room temperature. The average weight of the mangos at the first day of incubation was taken as reference. The results are shown in table 8.

**Table 8: weight loss of mangos coated with EVOH based compositions.**

| | % weight loss |
|---|---|
| Control | 8,7 |
| Composition D | 8,46 |
| Composition E | 8,27 |
| Composition F | 8,12 |

Table 8 shows that when EVOH containing compositions according to the invention are applied to mangos, a reduction of weight loss of mangos is achieved compared to untreated mangos.

### Example 8

To test the effect of coating oranges post-harvest with various compositions according to the invention, fruits were coated with compositions D, E and F as described in example 7. Oranges were coated in accordance with the method described in example 1 and weight loss was determined after 21 days incubation at room temperature. Uncoated mangos were taken as control. Average weight loss of 9 mangos per test condition was determined after 21 days incubation at room temperature. The average weight of the mangos at the first day of incubation was taken as reference. The results are shown in table 9.

**Table 9: weight loss of oranges coated with EVOH based compositions.**

| | % weight loss |
|---|---|
| Control | 12,74 |
| Composition D | 10,64 |
| Composition E | 10,91 |
| Composition F | 9,78 |

Table 9 shows that when EVOH containing compositions according to the invention are applied to oranges, a reduction of weight loss of oranges is achieved compared to untreated oranges.

### Example 9

A number of spacing agents was tested for their influence on weight loss of mangos. For this purpose compositions were prepared with PVOH (POVAL 6-88 of Kuraray (POVAL™), viscosity ∼6, hydrolysis grade ∼ 88 mol.%) in a concentration of 3,5 wt.% based on the weight of the composition. The spacing agents were used in concentrations of 0,01 and 0,1 wt.% based on the weight of the polymer in the composition. As a control a composition containing 3,5 wt.% POVAL 6-88 based on the weight of the composition without spacing agent added was used. Mangos were coated in accordance with the method described in example 1 and average weight loss percentages of 7 mangos per test condition were determined after 9 days incubation at room temperature. The results are shown in table 10 below, which shows the percentages of weight loss after 9 days of incubation based on the average weight of 7 mangos.

**Table 10: weight loss of mangos with different spacing agents.**

| Spacing agent → | Control | Glycerol | Sorbitol | Propylene glycol |
|---|---|---|---|---|
| Concentration spacing agent ↓ | | | | |
| No spacing agent added (control) | 7,27 % | n.a. | n.a. | n.a. |
| 0,01 wt.% spacing agent | n.a. | 6,00 % | 6,48 % | 6,79 % |
| 0,1 wt. % spacing agent | n.a. | 6,59 % | 7,22 % | 6,81 % |

Table 10 shows that the presence of spacing agents glycerol, sorbitol or propylene glycol in a coating has an advantageous effect on the weight loss of mangos compared to mangos coated with a composition without spacing agent. Inclusion of either of these spacing agents resulted in reduced weight loss of mangos (between 6,00 and 7,22 %) compared to mangos coated with a composition without a spacing agent (7,27 %).

The above examples show that in accordance with the invention marked reduction of weight loss of fruit produce is achieved in combination with improved gloss if said fruit is coated with the composition as defined in the claims. The best results are obtained with respect to gloss improvement when compositions are used wherein the composition is an aqueous dispersion of polyvinyl alcohol homopolymer and spacing agent without a requirement for further dispersed substances.

## Claims

1. A composition for coating edible fruit in the form of a dispersion with water as the dispersant and comprising a plurality of dispersed substances, comprising
A) a polymer or a mixture of polymers, comprising
A1) a linear homopolymer or copolymer of vinyl alcohol having a hydrolysis degree between 75 and 100% or a combination thereof, wherein said polymer of vinyl alcohol constitutes at least 50% by weight of the total weight of the dispersed polymeric substances; or
A2) a linear homopolymer or copolymer of vinyl alcohol having a hydrolysis degree between 75 and 100% or a combination thereof, and a polymer produced from the monomers vinyl acetate and ethylene and optionally a vinyl ester of a highly branched carboxylic acid; and
B) a spacing agent, wherein said spacing agent is present in an amount between 0,001 and 0,9 % by weight based on the weight of the polymers within the composition, and wherein the spacing agent is a polyol.

2. The composition according to claim 1, wherein the vinyl alcohol polymer is a polyvinyl alcohol homopolymer, an ethylene vinyl alcohol copolymer or a combination thereof.

3. The composition according to claim 1, wherein the vinyl alcohol polymer is a polyvinyl alcohol homopolymer.

4. The composition according to any of the claims 1 to 3, wherein said homopolymer and/or copolymer of vinyl alcohol has/have a hydrolysis degree between 85 and 100 %, such as between 95 and 99,9 %, such as between 97 and 99,5 % or between 85 and 98 % or between 88 and 98 %.

5. The composition according to any of the claims 1 to 4, wherein
the polyvinyl alcohol homopolymer has a viscosity lower than 11,5 and a hydrolysis degree of between 95 and 100 %; and/or wherein
the ethylene vinyl alcohol copolymer has a viscosity lower than 30 and a hydrolysis degree of between 95 and 100 %.

6. The composition according to any of the claims 1 to 5, wherein said spacing agent is present in the composition in an amount between 0,1 to 0,5 % by weight based on the weight of the polymers within the composition.

7. The composition according to any of the claims 1 to 6, wherein said spacing agent is a polyol selected from the group of glycerol, sorbitol, propylene glycol, polyethylene glycol or mixtures thereof, preferably glycerol.

8. The composition according to any of the claims 1 to 7 wherein said polymer of vinyl alcohol constitutes at least 50% by weight based on the total weight of the dispersed polymeric substances, preferably based on the total weight of all dispersed substances.

9. The composition according to claim 8, which comprises vinyl alcohol polymers in a proportion of at least 55% by weight of the total weight of the dispersed polymeric substances, such as at least 60 %, at least 65%, at least 75 %, at least 80%, at least 85%, at least 90%, at least 95%, at least 96 %, at least 97%, at least 98% or at least 99% by weight of the total weight of the dispersed polymeric substances or in ranges between any two of these percentages.

10. The composition according to any of the claims 1 to 9, wherein the composition comprises less than 1% by weight of the polymers in the composition of further polymers than the polymers defined under A1) and A2).

11. The composition according to any of the claims 1 to 10, wherein the composition comprises less than 10% by weight of further dispersed substances based on the volume of the composition.

12. The composition according to any of the claims 1 to 11, wherein the composition is a dispersion of polyvinyl alcohol homopolymer and glycerol and less than 10% by weight of further dispersed substances in water.

13. A method for coating edible fruit, comprising applying post-harvest to said fruit a composition in the form of a dispersion with water as the dispersant and comprising a plurality of dispersed substances, comprising
A) a polymer or a mixture of polymers, comprising
A1) a linear homopolymer or copolymer of vinyl alcohol having a hydrolysis degree between 75 and 100% or a combination thereof wherein said polymer of vinyl alcohol constitutes at least 50% by weight of the total weight of the dispersed polymeric substances; or
A2) a linear homopolymer or copolymer of vinyl alcohol having a hydrolysis degree between 75 and 100% or a combination thereof and a polymer produced from the monomers vinyl acetate and ethylene and optionally a vinyl ester of a highly branched carboxylic acid; and
B) a spacing agent, wherein said spacing agent is present in an amount between 0,001 and 1,0 % by weight based on the weight of the polymers within the composition, and wherein said spacing agent is a polyol.

14. Method according to claim 13, wherein said composition is as defined in any of the claims 1 to 12.

15. An edible fruit item, coated in accordance with the method according to claim 13 or 14.

## Patentansprüche

1. Zusammensetzung zum Überziehen von essbaren Früchten in Form einer Dispersion mit Wasser als Dispersionsmittel, die eine Vielzahl von dispergierten Substanzen umfasst, umfassend
A) ein Polymer oder Gemisch von Polymeren, umfassend
A1) ein lineares Homopolymer oder Copolymer von Vinylalkohol, das einen Hydrolysegrad zwischen 75 und 100% aufweist, oder eine Kombination davon, wobei das Polymer von Vinylalkohol wenigstens 50 Gew.-% des Gesamtgewichts der dispergierten polymeren Substanzen ausmacht; oder
A2) ein lineares Homopolymer oder Copolymer von Vinylalkohol,
das einen Hydrolysegrad zwischen 75 und 100% aufweist, oder eine Kombination davon und ein Polymer, das aus den Monomeren Vinylacetat und Ethylen und gegebenenfalls einem Vinylester einer hochgradig verzweigten Carbonsäure hergestellt ist; und
B) ein Auflockerungsmittel, wobei das Auflockerungsmittel in einer Menge zwischen 0,001 und 0,9 Gew.-% vorhanden ist, bezogen auf das Gewicht der Polymere innerhalb der Zusammensetzung, und wobei das Auflockerungsmittel ein Polyol ist.

2. Zusammensetzung gemäß Anspruch 1, wobei das Vinylalkohol-Polymer ein Polyvinylalkohol-Homopolymer, ein Ethylen-Vinylalkohol-Copolymer oder eine Kombination davon ist.

3. Zusammensetzung gemäß Anspruch 1, wobei das Vinylalkohol-Polymer ein Polyvinylalkohol-Homopolymer ist.

4. Zusammensetzung gemäß einem der Ansprüche 1 bis 3, wobei das Homopolymer und/oder Copolymer von Vinylalkohol einen Hydrolysegrad zwischen 85 und 100%, wie etwa zwischen 95 und 99,9%, wie zwischen 97 und 99,5% oder zwischen 85 und 98% oder zwischen 88 und 98%, aufweist.

5. Zusammensetzung gemäß einem der Ansprüche 1 bis 4, wobei
das Polyvinylalkohol-Homopolymer eine Viskosität von unter 11,5 und einen Hydrolysegrad zwischen 95 und 100% aufweist; und/oder wobei
das Ethylen-Vinylalkohol-Copolymer eine Viskosität von unter 30 und einen Hydrolysegrad zwischen 95 und 100% aufweist.

6. Zusammensetzung gemäß einem der Ansprüche 1 bis 5, wobei das Auflockerungsmittel in der Zusammensetzung in einer Menge zwischen 0,1 und 0,5 Gew.-% vorhanden ist, bezogen auf das Gewicht der Polymere innerhalb der Zusammensetzung.

7. Zusammensetzung gemäß einem der Ansprüche 1 bis 6, wobei das Auflockerungsmittel ein Polyol ist, das aus der Gruppe Glycerin, Sorbit, Propylenglycol, Polyethylenglycol oder Gemischen davon, vorzugsweise Glycerin, ausgewählt ist.

8. Zusammensetzung gemäß einem der Ansprüche 1 bis 7, wobei das Polymer von Vinylalkohol wenigstens 50 Gew.-% ausmacht, bezogen auf das Gesamtgewicht der dispergierten polymeren Substanzen, vorzugsweise bezogen auf das Gesamtgewicht aller dispergierten Substanzen.

9. Zusammensetzung gemäß Anspruch 8, die Vinylalkohol-Polymere in einem Anteil von wenigstens 55 Gew.-% des Gesamtgewichts der dispergierten polymeren Substanzen, wie wenigstens 60%, wenigstens 65%, wenigstens 75%, wenigstens 80%, wenigstens 85%, wenigstens 90%, wenigstens 95%, wenigstens 96%, wenigstens 97%, wenigstens 98% oder wenigstens 99% des Gesamtgewichts der dispergierten polymeren Substanzen oder in Bereichen zwischen irgend zwei dieser Prozentanteile umfasst.

10. Zusammensetzung gemäß einem der Ansprüche 1 bis 9, wobei die Zusammensetzung weniger als 1 Gew.-% der Polymere in der Zusammensetzung weiterer Polymere außer den unter A1) und A2) definierten Polymeren umfasst.

11. Zusammensetzung gemäß einem der Ansprüche 1 bis 10, wobei die Zusammensetzung weniger als 10 Gew.-% weiterer dispergierter Substanzen umfasst, bezogen auf das Volumen der Zusammensetzung.

12. Zusammensetzung gemäß einem der Ansprüche 1 bis 11, wobei die Zusammensetzung eine Dispersion von Polyvinylalkohol-Homopolymer und Glycerin und weniger als 10 Gew.-% weiterer dispergierter Substanzen in Wasser ist.

13. Verfahren zum Überziehen von essbaren Früchten, umfassend das Auftragen einer Zusammensetzung in Form einer Dispersion mit Wasser als Dispersionsmittel, die eine Vielzahl von dispergierten Substanzen umfasst, auf die bereits geerntete Frucht, umfassend:
A) ein Polymer oder Gemisch von Polymeren, umfassend
A1) ein lineares Homopolymer oder Copolymer von Vinylalkohol, das einen Hydrolysegrad zwischen 75 und 100% aufweist, oder eine Kombination davon, wobei das Polymer von Vinylalkohol wenigstens 50 Gew.-% des Gesamtgewichts der dispergierten polymeren Substanzen ausmacht; oder
A2) ein lineares Homopolymer oder Copolymer von Vinylalkohol, das einen Hydrolysegrad zwischen 75 und 100% aufweist, oder eine Kombination davon und ein Polymer, das aus den Monomeren Vinylacetat und Ethylen und gegebenenfalls einem Vinylester einer hochgradig verzweigten Carbonsäure hergestellt ist; und
B) ein Auflockerungsmittel, wobei das Auflockerungsmittel in einer Menge zwischen 0,001 und 1,0 Gew.-% vorhanden ist, bezogen auf das Gewicht der Polymere innerhalb der Zusammensetzung, und wobei das Auflockerungsmittel ein Polyol ist.

14. Verfahren gemäß Anspruch 13, wobei die Zusammensetzung wie in einem der Ansprüche 1 bis 12 definiert ist.

15. Essbarer Fruchtartikel, überzogen nach dem Verfahren gemäß Anspruch 13 oder 14.

## Revendications

1. Composition pour enrober un fruit comestible sous la forme d'une dispersion avec de l'eau en tant que dispersant et comprenant une pluralité de substances dispersées, comprenant
A) un polymère ou un mélange de polymères, comprenant
A1) un homopolymère ou copolymère linéaire d'alcool vinylique ayant un degré d'hydrolyse compris entre 75 et 100 % ou une combinaison de tels polymères, lequel polymère d'alcool vinylique représente au moins 50 % en poids du poids total des substances polymères dispersées ; ou
A2) un homopolymère ou copolymère linéaire d'alcool vinylique ayant un degré d'hydrolyse compris entre 75 et 100 % ou une combinaison de tels polymères, et un polymère produit à partir des monomères acétate de vinyle et éthylène et éventuellement d'un ester vinylique d'un acide carboxylique fortement ramifié ; et
B) un agent d'espacement, lequel agent d'espacement est présent en une quantité comprise entre 0,001 et 0,9 % en poids par rapport au poids des polymères dans la composition, et lequel agent d'espacement est un polyol.

2. Composition selon la revendication 1, dans laquelle le polymère d'alcool vinylique est un homopolymère de poly(alcool vinylique), un copolymère d'éthylène-alcool vinylique, ou une de leurs combinaisons.

3. Composition selon la revendication 1, dans laquelle le polymère d'alcool vinylique est un homopolymère de poly(alcool vinylique).

4. Composition selon l'une quelconque des revendications 1 à 3, dans laquelle ledit homopolymère et/ou copolymère d'alcool vinylique a un degré d'hydrolyse compris entre 85 et 100 %, tel qu'entre 95 et 99,9 %, tel qu'entre 97 et 99,5 % ou entre 85 et 98 % ou entre 88 et 98 %.

5. Composition selon l'une quelconque des revendications 1 à 4, dans laquelle
l'homopolymère de poly(alcool vinylique) a une viscosité inférieure à 11,5 et un degré d'hydrolyse compris entre 95 et 100 % ; et/ou dans laquelle le copolymère d'éthylène-alcool vinylique a une viscosité inférieure à 30 et un degré d'hydrolyse compris entre 95 et 100 %.

6. Composition selon l'une quelconque des revendications 1 à 5, dans laquelle ledit agent d'espacement est présent dans la composition en une quantité comprise entre 0,1 et 0,5 % en poids par rapport au poids des polymères dans la composition.

7. Composition selon l'une quelconque des revendications 1 à 6, dans laquelle ledit agent d'espacement est un polyol choisi dans le groupe comprenant le glycérol, le sorbitol, le propylène glycol, le polyéthylène glycol et leurs mélanges, de préférence le glycérol.

8. Composition selon l'une quelconque des revendications 1 à 7, dans laquelle ledit polymère d'alcool vinylique représente au moins 50 % en poids par rapport au poids total des substances polymères dispersées, de préférence par rapport au poids total de toutes les substances dispersées.

9. Composition selon la revendication 8, qui comprend des polymères d'alcool vinylique en une proportion d'au moins 55 % en poids du poids total des substances polymères dispersées, telle qu'au moins 60 %, au moins 65 %, au moins 75 %, au moins 80 %, au moins 85 %, au moins 90 %, au moins 95 %, au moins 96 %, au moins 97 %, au moins 98 % ou au moins 99 % en poids du poids total des substances polymères dispersées ou dans des plages comprises entre deux quelconques de ces pourcentages.

10. Composition selon l'une quelconque des revendications 1 à 9, laquelle composition comprend moins de 1 % en poids, des polymères dans la composition, de polymères autres que les polymères définis en A1) et A2).

11. Composition selon l'une quelconque des revendications 1 à 10, laquelle composition comprend moins de 10 % en poids d'autres substances dispersées, par rapport au volume de la composition.

12. Composition selon l'une quelconque des revendications 1 à 11, laquelle composition est une dispersion d'homopolymère de poly(alcool vinylique) et de glycérol et de moins de 10 % en poids d'autres substances dispersées dans de l'eau.

13. Procédé pour enrober un fruit comestible, comprenant l'application après récolte sur ledit fruit d'une composition sous la forme d'une dispersion avec de l'eau en tant que dispersant et comprenant une pluralité de substances dispersées, comprenant
A) un polymère ou un mélange de polymères, comprenant
A1) un homopolymère ou copolymère linéaire d'alcool vinylique ayant un degré d'hydrolyse compris entre 75 et 100 % ou une combinaison de tels polymères, lequel polymère d'alcool vinylique représente au moins 50 % en poids du poids total des substances polymères dispersées ; ou
A2) un homopolymère ou copolymère linéaire d'alcool vinylique ayant un degré d'hydrolyse compris entre 75 et 100 % ou une combinaison de tels polymères, et un polymère produit à partir des monomères acétate de vinyle et éthylène et éventuellement d'un ester vinylique d'un acide carboxylique fortement ramifié ; et
B) un agent d'espacement, lequel agent d'espacement est présent en une quantité comprise entre 0,001 et 1,0 % en poids par rapport au poids des polymères dans la composition, et lequel agent d'espacement est un polyol.

14. Procédé selon la revendication 13, dans lequel ladite composition est telle que définie dans l'une quelconque des revendications 1 à 12.

15. Fruit comestible enrobé conformément au procédé de la revendication 13 ou 14.
